(19) Europäisches Patentamt
European Patent Office
Office européen des brevets

(11) **EP 2 196 900 A1**

(12) **EUROPEAN PATENT APPLICATION**

(43) Date of publication:
**16.06.2010 Bulletin 2010/24**

(51) Int Cl.:
*G06F 7/72* (2006.01)

(21) Application number: **09177691.4**

(22) Date of filing: **02.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.12.2008 KR 20080125157**

(71) Applicant: **Electronics and Telecommunications Research Institute Daejeon 305-350 (KR)**

(72) Inventors:
• **Jo, Gweon-Do**
  **302-222, Daejeon (KR)**
• **Kim, Joon-Hyung**
  **305-759, Daejeon (KR)**
• **Jung, Jae-Ho**
  **305-509, Daejeon (KR)**
• **Lee, Kwang-Chun**
  **305-370, Daejeon (KR)**

(74) Representative: **Betten & Resch Patentanwälte Theatinerstrasse 8 80333 München (DE)**

(54) **Modulo 3 reduction**

(57)    A modular-3 calculation method for binary number includes: determining whether two 1s consecutive from MSB exist in a binary number, when a target value for modular-3 calculation is inputted, and generating a first binary number by substituting the two ls with 0 whenever the consecutive two 1s exist; performing a modular-3 calculation on the first binary number; and determining the result of the modular-3 calculation.

FIG. 1

EP 2 196 900 A1

**Description**

**CROSS-REFERENCE(S) TO RELATED APPLICATIONS**

The present application claims priority of Korean Patent Application No(s). 10-2008-0125157, filed on December 10, 2008, which is incorporated herein by reference in its entirety.

**BACKGROUND OF THE INVENTION**

**Field of the Invention**

Exemplary embodiments of the present invention relates to a modular calculation apparatus and method for a digital electronic device; and, more particularly, to a modular-3 calculation apparatus and method.

**Description of Related Art**

Generally, modular calculation is widely used in electronic devices which process digital signals. Due to characteristic of a binary number, modular-$2^n$ calculation is relatively easy. For example, a modular-2 calculation result may be obtained by taking only the least significant bit (LSB) of a target number, and a modular-4 calculation may be easily obtained by taking LSB 2 bits of a target number.
However, the case of modular calculations other than modular-$2^n$ calculation, the above-described method may not be applied. Therefore, a variety of methods have been used for those calculations during digital signal processing. For example, the modular-3 is calculated using the following two methods.
The first method is to calculate the remainder of the divide-by-3 operation. The second method is used when the division operation is difficult. The second method is to obtain a result when the remainder given by repetitively subtracting 3 from a target number is smaller than 3. The first and second methods are widely used in the modular-3 calculation.
In the case of the first method for the modular-3 calculation, the division operation is complex. That is, the division operation is avoided in the field of digital signal processing, if possible, because the amount of computation is large. Furthermore, when the division operation is implemented with logics, a large number of devices are required. Hence, the logics are complicated and the current consumption is large. Therefore, a look-up table prepared beforehand may be used in order to avoid the division operation. However, the look-up table requires a large number of memories when the number of bits is large, and it is not preferable when variable bits are used. Moreover, methods of calculating approximate values using certain formulas have been used.
The second method for the modular-3 calculation is one of methods which can avoid the division operation. In the case of a method which uses the subtraction operation for modular-3 calculation, however, the number of repetition increases as a value to be calculated is larger, and the deviation in the number of petition is large, depending on the value. Consequently, there is a limitation in implementation with digital signal processing logic.

**SUMMARY OF THE INVENTION**

An embodiment of the present invention is directed to a modular-3 calculation apparatus and method which are capable of reducing complexity.
Another embodiment of the present invention is directed to a modular-3 calculation apparatus and method which are capable of implemented with a simple logic.
Another embodiment of the present invention is directed to a modular- calculation apparatus and method which are capable of reducing power consumption of electronic devices.
Another embodiment of the present invention is directed to a modular-3 calculation apparatus and method which are capable of reducing a memory size.
Another embodiment of the present invention is directed to an apparatus and method for calculating modular-3, which are capable of fast calculation.
Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.
In accordance with an embodiment of the present invention, a modular-3 calculation method for binary number includes: determining whether two 1s consecutive from MSB exist in a binary number, when a target value for modular-3 calculation is inputted, and generating a first binary number by substituting the two 1s with 0 whenever the consecutive two 1s exist; performing a modular-3 calculation on the first binary number; and determining the result of the modular-3 calculation.

In accordance with another embodiment of the present invention, a modular-3 calculation apparatus includes: a switch configured to output one of a target value for modular-3 calculation and an updated value; a first memory configured to store an output of the switch; a second memory configured to store a bit value equal to the value stored in the first memory; an operator configured to calculate a difference between the value stored in the first memory and the value stored in the second memory; and a controller configured to substitute the value stored in the memory with 0 on a consecutive pair basis when 1s consecutive from MSB exist, extract information on position of 1 existing in uppermost position in the value stored in the first memory, set the value stored in the second memory to 0 when the position information is more than lower 2 bits, substitute the value stored in the second memory so that a pair consecutive from position less than the position value by 1 has 1, and determine the value stored in the first memory by using the lower 2 bits when the position information is the lower 2 bits or less.

In accordance with another embodiment of the present invention, a modular-3 calculation apparatus for binary number includes: a switch configured to output one of a target value for modular-3 calculation and an updated value; a first memory configured to store an output of the switch; a second memory configured to store a bit value equal to the value stored in the first memory; an operator configured to calculate a difference between the value stored in the first memory and the value stored in the second memory; and a controller configured to substitute the value stored in the memory with 0 on a consecutive pair basis when ls consecutive from MSB exist, extract information on position of 1 existing in uppermost position in the value stored in the first memory, set the value stored in the second memory to 0 when the position information is more than lower 2 bits, perform $\lceil \cdot \rceil$ operation on the position value to determine number of pairs of 1s consecutive from position less than the position value by 1 in LSB direction, where $\lceil \cdot \rceil$ represents maximum integer that does not exceed a value •, update pairs of 1s consecutive from the position less than the position value by 1 as many as the determined pairs in the second memory, and determine the value stored in the first memory by using the lower 2 bits when the position information is the lower 2 bits or less.

## BRIEF DESCRIPTION OF THE DRAWINGS

Fig. 1 is a control flowchart of a modular-3 calculation in accordance with an embodiment of the present invention.

Fig. 2 is a block diagram of a modular-3 calculation apparatus in accordance with an embodiment of the present invention.

## DESCRIPTION OF SPECIFIC EMBODIMENTS

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention. The drawings are not necessarily to scale and in some instances, proportions may have been exaggerated in order to clearly illustrate features of the embodiments.

A modular-3 calculation method which is more efficient than the prior art, will be described below. The following two features of a multiple of 3 are used herein.

- Feature 1: A difference between a multiple of 3 and another multiple of 3 is a multiple of 3.
- Feature 2: Two consecutive 1s in a binary number are a multiple of 3. For example, 8-bit binary numbers "00000011", "00001100", "00110000", and "11000000" are a multiple of 3.

A modular-3 calculation method using the above features in accordance with an embodiment of the present invention will be described below. It is assumed that a modular-3 calculation is performed on an arbitrary 8-bit binary number A0=00111001 (57, a multiple of 3). The LSB is the zeroth bit, and the MSB is the seventh bit.

Since the fifth bit and the fourth bit are consecutively 1s, there is no problem in determining a multiple of 3 even when 00110000, a multiple of 3, is subtracted. That is, both of the fifth bit and the fourth bit are substituted with 0s. As a result, a value A1 obtained when two consecutive bits "1" in A0 are substituted with "0" is expressed as Equation 1 below.

$$A1 = 00001001 \qquad \text{Eq. 1}$$

Then, a position of 1 having the largest weight in the value A1 is checked. The phrase "having the largest weight" means that it is closest to the MSB. Therefore, the position of 1 closest to the MSB, that is, having the largest weight, is the third bit. However, if the position of 1 having the largest weight in the value A1 is the first bit, the operation is not required any more. Consequently, the operation is additionally performed until the position of 1 having the largest weight is changed to the first bit or less.

In the above example, the value having the largest weight in the value A1 is not located at the first bit or less. Therefore, an arbitrary number B, which is a multiple of 3, is used. At this time, the value B is defined by a value having two consecutive 1s after the position of 1 having the largest weight in the value A1. That is, the value B is determined as Equation 2 below.

$$B = 00000110 \qquad \text{Eq. 2}$$

When the value B is determined, the operation of Equation 3 below is performed using the above-described feature 1.

$$A2 = A1 - B \qquad \text{Eq. 3}$$

In the above operation, since the value B has two consecutive 1s at two positions after the position of 1 having the largest weight in the value A1 toward the LSB side, B becomes a multiple of 3. Even though a multiple of 3 is subtracted from the value A1, the modular-3 calculation is not affected. Consequently, the value A2 has the same value as the result of the modular-3 calculation of A1. Therefore, if such an operation is performed, A2 is expressed as Equation 4 below.

$$A2 = 00000011 \qquad \text{Eq. 4}$$

At this time, the position of 1 having the largest weight in the value A2 is the first bit. Since the position of 1 having the largest weight is the first bit, it may be determined whether the value A2 is a multiple of 3. In the above case, since the value A2 is "00000011", i.e., "$1*2^1 + 1*2^0$"=3, it can be seen that the value A2 is a multiple of 3.

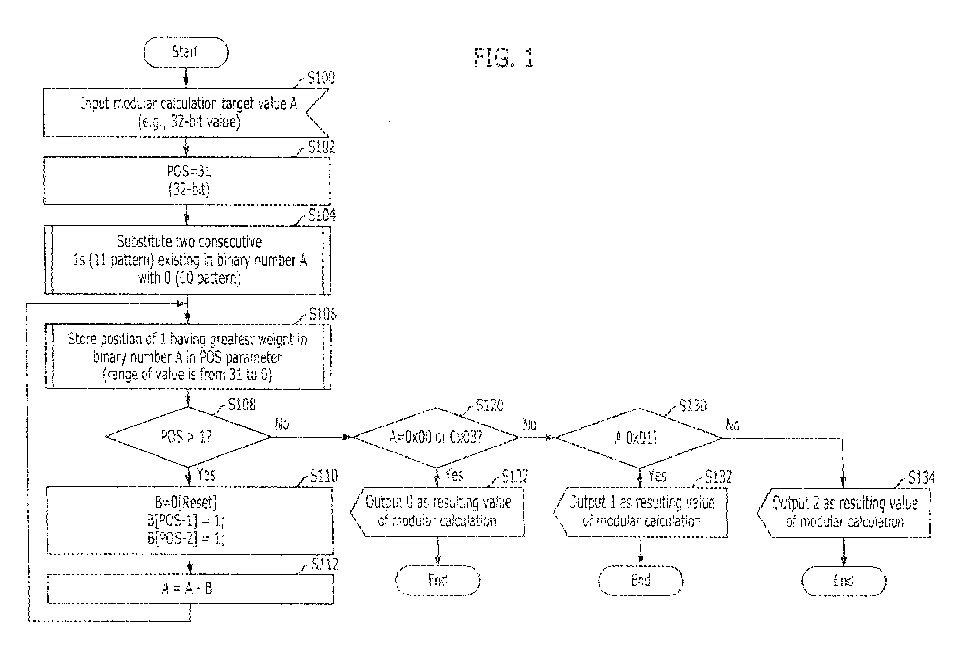

The above-described procedure will be described below with reference to Fig. 1.

Fig. 1 is a control flowchart of a modular-3 calculation in accordance with an embodiment of the present invention. In Fig. 1, it is assumed that a 32-bit input value is received.

At step S100, a value subject to the modular-3 calculation is received. This value corresponds to the above-described value A. At step S102, a position of the MSB of the target value A received at step S102 is stored in a POS parameter. The POS parameter represents a bit position, In step 104, when the value for the initial modular-3 calculation is received and the POS parameter is set, two consecutive "1s" from the LSB in the binary number A are substituted with "0s". That is, the value A is checked from the LSB and, if "11" patterns exist in the value A, each "11" pattern is substituted with "00". At step S106, when the substitution is completed, the position of 1 having the largest weight in the binary number A is stored in the POS parameter. At step S108, it is determined whether the POS value is larger than 1. When it is determined at step S108 that the POS value is greater than 1, the process proceeds to step S110; otherwise, the process proceeds to step S120. Determining whether the POS value is larger than 1 is done for checking whether the value calculated by the modular-3 calculation can be determined. That is, the case where the POS value is not larger than 1 is a case where the POS value is 1 or 0. Therefore, this is a case where 1 exists or does not exist in the last two bits. As such, when only the last two bits remain, the result of the modular-3 calculation can be deduced.

The case that proceeds to step S110 will be described below. At step S110, the value B is reset to 0, and 1s are set to the position POS-1 and the position POS-2 of the value B to be newly set. That is, as described above, two consecutive values after the position of 1 having the largest weight are set to 1s in the substituted value B. The newly generated value B becomes a multiple of 3 smaller than the value A. Therefore, at step S112, the value B generated with an arbitrary multiple of 3 is subtracted from the value A. Even when the arbitrary multiple of 3 is subtracted from the value A, the resulting value is not affected because the resulting value has the same result as the modular-3 calculation of the value A. The calculated value is again determined as the value A. The process returns to step S106, and the above-described procedures are repeated.

Meanwhile, the case that proceeds from step S108 to step S120 is a case where 1 exists or does not exist in only two bits on the LSB side. Therefore, it is determined whether the value A is 0x00 or 0x03. That is, it is determined at step S120 whether the value A is a multiple of 3. When it is determined that the value A is 0x00 or 0x03, the process proceeds to step S122 to output 0 as the resulting value of the modular-3 calculation. On the other hand, when it is determined in step S120 that the value A is neither 0x00 nor 0x03, the process proceeds to step S130 to determine whether the value A is 0x01. When the value A is 0x01, the process proceeds to step S132 to determine that the resulting value of the modular-3 calculation is 1. When the value A is not 0x01, the process proceeds to step S134 to determine that the resulting value of the modular-3 calculation is 2.

The above procedure will be described taking an example that an 8-bit value is 88. A decimal number 88 is expressed as a binary number "01011000". When this value is inputted, the POS value is set to 7 at step S102. At step S104, the consecutive 1s are substituted with "00". The consecutive values 11 are the fourth position and the fifth position, respectively. When the substitution is completed, the resulting value becomes "01000000". At step S106, the position of 1 having the largest weight is the sixth position. This value is stored in the POS parameter. Since the POS value is larger than 1 at step S108, the process proceeds to step S110. At step S110, the value B is reset to 0, and the value obtained by substituting the position POS-1 and the position POS-2 with 1s is generated as the value B. That is, the value B generated at step S110 becomes "00110000". Then, the process proceeds to step S112 to subtract the value B from the value A. The subtraction result of the two values becomes "00010000". Therefore, at step S112, the calculation result value again becomes the value A. Then, the process proceeds to step S106. At step S106, the position of 1 having the largest weight in the value A is updated with the PSO value. At this time, the POS value is 4. At step S108, since the generated POS value is 4, it is lager than 1. Therefore, the process proceeds to step S110 to generate "00001100" as the value B according to the above-described manner. At step S112, "00000100" is obtained from the calculation of the difference of the two values, and this value again becomes the value A. At step S106, the POS value is set to 2. The process proceeds to steps S108 and S110. At step S110, the value B is again set to "00000011". At step S112, if calculating the difference of the value A and the value B, the resulting value becomes "00000001" and is again determined as the value A. The POS value is 0 at step 1, and the process proceeds to steps S108 and S120. Since the value is neither 0x00 nor 0x03 at step S120, the process proceeds to step S130. Since it is determined at step S130 that the value A is 0x01, the process proceeds to step S132. At step S132, the result of the modular-3 calculation becomes 1.

The above-described calculation can be verified as follows: "88=3*27+1". Therefore, it can be confirmed that the result of the modular-3 calculation becomes 1.

In the above-described embodiment, the checking has been performed by disposing a pair of 1s just below the position of the POS value. However, when the number of bits is large, several pairs of 1s may be disposed in the above-described manner. This will be described below, taking an example of "88". A decimal number 88 is expressed as a binary number "01011000". Therefore, when the positions of consecutive 11 are substituted, the resulting value becomes "01011000". The POS value becomes 6. When a new value B is generated, the consecutive pairs of 1s may be disposed by as much as the value obtained by dividing the POS value by 2. That is, since the POS value is 6, the value obtained by dividing the POS value by 2 becomes 3. Therefore, since the consecutive pairs of 1s are three, the value B may be newly generated like "00111111". The generated value is the sum of "00110000", "00001100", and "00000011". Since those values are a multiple of 3, "00111111" becomes a multiple of 3. Therefore, if the value B is generated in such a manner, the result can be obtained through one-time subtraction.

If the POS value is odd, ⌈POS/2⌉ operation may be used. ⌈•⌉ represents the maximum integer which does not exceed the value "•". Therefore, the POS value is 5, the pair of the consecutive "1s" may be 2. For example, when an 8-bit binary number having a value of 46 is inputted, the binary number becomes "00101110". As described above, when the pair of "1s" consecutive from the MSB exists and is substituted with 0s, the resulting value becomes "00100010". This value becomes the value A. In this case, the POS value becomes 5. Therefore, when determining the value B, the value "11" may generate two pairs of "11" consecutively like the above calculation. That is, the value B becomes "00011110". Then, the result of the "A-B" operation becomes "00000100", and this value again becomes the value A. In this case, the POS value becomes 3. Thus, "00000011" is generated as the value B. Therefore, the result of the "A-B" operation becomes "00000001", and this value becomes the value A. Thus, the POS value becomes 0. When the determination operation is performed, the result of the modular-3 calculation becomes 1.

The above-described second method may reduce the subtraction operation when the modular calculation must be performed on a large number of bits.

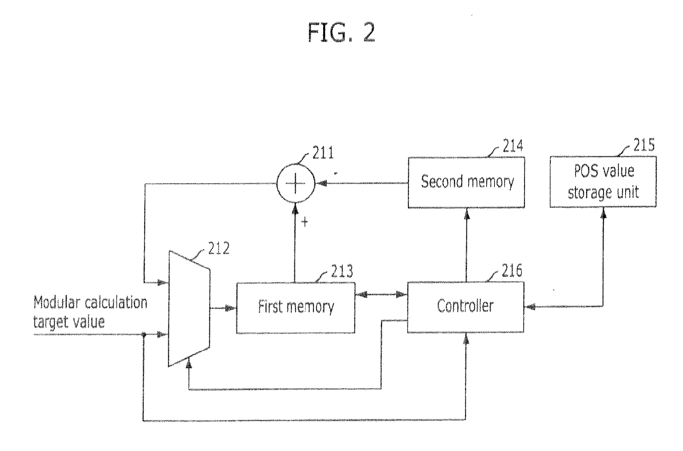

Fig. 2 is a block diagram of a modular-3 calculation apparatus in accordance with an embodiment of the present invention.

Referring to Fig. 2, a multiplexer 212 receives a modular calculation target value and a value updated in accordance with the embodiment, and outputs one of the input values under the control of a controller 216, which will be described later. The multiplexer 212 may be replaced with a switch. That is, the multiplexer 212 may be replaced with a switch configured to be connected to one of the modular calculation target value and the updated value. A first memory 213 stores the modular calculation target value, and has an area which can store a partially substituted value of the updated value and the modular calculation target value. The first memory 213 may be implemented using various devices, such as a register and a buffer. A POS value storage unit 215 is a memory which stores information on position of 1 having the largest weight in the modular calculation target value. That is, the POS value represents the position value where the MSB 1 bit exists. The second memory 214 is a memory which stores a multiple of 3 calculated from the modular calculation target value and the POS value during the modular-3 calculation in accordance with the embodiment of the present invention. An adder 211 calculates a difference between the value outputted from the second memory 214 and the value stored in the first memory 213, and inputs the calculated difference to the multiplexer 212. The controller 216 generates the POS value and a value which will be stored n the second memory 214, performs a substitution operation on the value stored in the first memory 213, and controls an output path of the multiplexer 212. When the multiplexer 212 is replaced with a switch, the controller 216 controls a connection path of the switch.

The operation of the above-described configuration in accordance with a first embodiment and a second embodiment will be described below. To begin with, the first embodiment will be described.

When or just before the modular calculation target value is inputted to the multiplexer 212, the controller 216 recognizes the input of the modular calculation target value. Thus, the controller 216 controls the multiplexer 212 to output the modular calculation target value to the first memory 213. This procedure corresponds to step S100 of Fig. 1. When the modular calculation target value is inputted to the first memory 213, the controller 216 sets the POS value and stores the set POS value in the POS storage unit 215. This procedure corresponds to step S102 of Fig. 1. When 1s consecutive from the MSB exist, the target value stored in the first memory 213 is substituted with "00" on a pair basis. This procedure corresponds to step S104 of Fig. 1. The controller 216 finds the position value of 1 having the largest weight in the target values stored in the first memory 213, and stores the found position value in the POS storage unit 215. This procedure corresponds to step S106 of Fig. 1. The controller 216 substitutes the POS-1 position value and the POS-2 position value stored in the second memory 214 with 1s. This procedure corresponds to step S110 of Fig. 1. The controller 216 controls the adder 211 to subtract the value stored in the second memory 214 from the value stored in the first memory 213. The adder 211 may be implemented with a subtractor. The adder 211 may be configured to add the output value of the second memory 214 to a value to which 2's complement is applied. This subtraction operation corresponds to step S112 of Fig. 1.

The result of the subtraction operation is again inputted to the multiplexer 212. The controller 216 controls the multiplexer 212 to output the output value of the adder 211 to the first memory 213. The controller 216 determines the POS value using the value stored in the first memory 213, performs the subtraction operation or determination operation. The determination operation performed by the controller 216 corresponds to steps S120 to S134.

Next, the second embodiment will be described below.

When or just before the modular calculation target value is inputted to the multiplexer 212, the controller 216 recognizes the input of the modular calculation target value. Thus, the controller 216 controls the multiplexer 212 to output the modular calculation target value to the first memory 213. When the modular calculation target value is inputted to the first memory 213, the controller 216 sets the POS value and stores the set POS value in the POS storage unit 215. When 1s consecutive from the MSB exist, the target value stored in the first memory 213 is substituted with "00" on a pair basis. The controller 216 finds the position value of 1 having the largest weight in the target values stored in the first memory 213, and stores the found position value in the POS storage unit 215.

The controller 216 calculates how many pairs from the POS-1 location are substituted with "1" in the value stored in the second memory 214. That is, as described above, the controller 216 performs the ⌈POS/2⌉ operation to determine the number of pairs to be substituted with 1, and performs the substitution in the LSB direction successively as many times as the number of pairs determined on a "11" basis. The controller 216 controls the adder 211 to subtract the value stored in the second memory 214 from the value stored in the first memory 213. The subtraction operation may be configured as described above.

The result of the subtraction operation is inputted to the multiplexer 212. The controller 216 controls the multiplexer 212 to output the output value of the adder 211 to the first memory 213. Then, the controller 216 determines the POS value using the value stored in the first memory 213, performs the subtraction operation or determination operation. In the second embodiment, when a large number of bit values are inputted, the fast operation may be achieved because the modular-3 calculation is completed by performing the subtraction operation one time or two times.

In accordance with the exemplary embodiments of the present invention, the amount of computation may be greatly reduced, compared to the existing modular-3 calculation method, by appropriately using the features of a multiple of 3. Therefore, when the method and apparatus in accordance with the exemplary embodiments are applied to the digital signal processing, faster operation may be achieved and the number of logics used is reduced. Therefore, in view of heat sink and power consumption, affirmative effects are provided.

While the present invention has been described with respect to the specific embodiments, it will be apparent to those skilled in the art that various changes and modifications may be made without departing from the scope of the invention as defined in the following claims.

**Claims**

1.   A modular-3 calculation method for binary number, comprising:

determining whether two 1s consecutive from MSB exist in a binary number, when a target value for modular-3 calculation is inputted, and generating a first binary number by substituting the two ls with 0 whenever the consecutive two 1s exist;
performing a modular-3 calculation on the first binary number; and
determining the result of the modular-3 calculation.

2.   The modular-3 calculation method of claim 1, wherein the modular-3 calculation comprises:

checking and storing a position value of 1 having greatest weight in the first binary number;
proceeding to the procedure of determining the result of the modular-3 calculation when the position value is lower 2 bits or less;
setting a second binary number having same number of bits as the first binary number to 0 when the position value is more than the lower 2 bits, and updating the second binary number so that a pair of 1s are provided consecutively from a position less than the position value of the first binary number by 1 in LSB direction; and
calculating a difference between the first binary number and the second binary number, setting the calculated difference as the first binary number, and checking and storing the position value.

3.   The modular-3 calculation method of claim 2, wherein the result of the modular-3 calculation is determined using the lower 2 bits of the first binary number.

4.   The modular-3 calculation method of any one of claims 1. to 3, wherein the modular-3 calculation comprises:

checking and storing a position value of 1 having greatest weight in the binary number;
proceeding to the procedure of determining the result of the moular-3 calculation when the position value is lower 2 bits or less;
setting a second binary number having same number of bits as the first binary number to 0 when the position value is more than the lower 2 bits;
performing ⌈•⌉ operation on the position value, where ⌈•⌉ represents maximum integer that does not exceed a value •, determining number of pairs of 1s consecutive in LSB direction from a position whose value is less than the position value of the binary number by 1, and updating the second binary number so that pairs of 1s are provided consecutively from the position less than the position value of the second binary number by 1 in LSB direction; and
calculating a difference between the first binary number and the second binary number, setting the calculated difference as the first binary number, and checking and storing the position value.

5.   The modular-3 calculation method of claim 4, wherein the result of the modular-3 calculation is determined using the lower 2 bits of the first binary number.

6.   A modular-3 calculation apparatus, comprising:

a switch configured to output one of a target value for modular-3 calculation and an updated value;
a first memory configured to store an output of the switch;
a second memory configured to store a bit value equal to the value stored in the first memory;
an operator configured to calculate a difference between the value stored in the first memory and the value stored in the second memory; and

a controller configured to substitute the value stored in the memory with 0 on a consecutive pair basis when ls consecutive from MSB exist, extract information on position of 1 existing in uppermost position in the value stored in the first memory, set the value stored in the second memory to 0 when the position information is more than lower 2 bits, substitute the value stored in the second memory so that a pair consecutive from position less than the position value by 1 has 1, and determine the value stored in the first memory by using the lower 2 bits when the position information is the lower 2 bits or less.

7. The modular-3 calculation apparatus of claim 6, wherein the switch is configured with a multiplexer.

8. The modular-3 calculation apparatus of claim 6 or 7, further comprising a position value storage unit configured to store the position value.

9. A modular-3 calculation apparatus for binary number, comprising:

a switch configured to output one of a target value for modular-3 calculation and an updated value;

a first memory configured to store an output of the switch;

a second memory configured to store a bit value equal to the value stored in the first memory;

an operator configured to calculate a difference between the value stored in the first memory and the value stored in the second memory; and

a controller configured to substitute the value stored in the memory with 0 on a consecutive pair basis when ls consecutive from MSB exist, extract information on position of 1 existing in uppermost position in the value stored in the first memory, set the value stored in the second memory to 0 when the position information is more than lower 2 bits, perform $\lceil \bullet \rceil$ operation on the position value to determine number of pairs of 1s consecutive from position less than the position value by 1 in LSB direction, where $\lceil \bullet \rceil$ represents maximum integer that does not exceed a value •, update pairs of 1s consecutive from the position less than the position value by 1 as many as the determined pairs in the second memory, and determine the value stored in the first memory by using the lower 2 bits when the position information is the lower 2 bits or less.

10. The modular-3 calculation apparatus of claim 9, wherein the switch is configured with a multiplexer.

11. The modular-3 calculation apparatus of claim 9 or 10, further comprising a position value storage unit configured to store the position value.

# FIG. 1

Start

S100
Input modular calculation target value A
(e.g., 32-bit value)

S102
POS=31
(32-bit)

S104
Substitute two consecutive
1s (11 pattern) existing in binary number A
with 0 (00 pattern)

S106
Store position of 1 having greatest weight in
binary number A in POS parameter
(range of value is from 31 to 0)

S108
POS > 1?

Yes
S110
B=0[Reset]
B[POS-1] = 1;
B[POS-2] = 1;

S112
A = A - B

No →

S120
A=0x00 or 0x03?

Yes
S122
Output 0 as resulting value
of modular calculation

End

No →

S130
A 0x01?

Yes
S132
Output 1 as resulting value
of modular calculation

End

No →

S134
Output 2 as resulting value
of modular calculation

End

FIG. 2

Europäisches
Patentamt

European
Patent Office

Office européen
des brevets

## EUROPEAN SEARCH REPORT

Application Number

EP 09 17 7691

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/099322 A1 (QUALCOMM INC [US]; COUSINEAU KEVIN STUART [US]) 21 September 2006 (2006-09-21) * paragraph [0071] - paragraph [0089]; figure 3 * ----- | 1-11 | INV. G06F7/72 |
| Y | US 5 596 519 A (VAN AKEN JERRY R [US] ET AL) 21 January 1997 (1997-01-21) * column 125, line 9 - line 52; figures 5,44,45 * ----- | 1-11 | |
| A | PIESTRAK S J: "Design of residue generators and multioperand adders modulo 3 built of multioutput threshold circuits" IEE PROCEEDINGS: COMPUTERS AND DIGITAL TECHNIQUES, IEE, GB, vol. 141, no. 2, 1 March 1994 (1994-03-01), pages 129-34, XP006001586 ISSN: 1350-2387 * page 130, line 14 - line 39 * ----- | 1,4,6,9 | |
| A | FR 2 786 579 A1 (ST MICROELECTRONICS SA [FR]) 2 June 2000 (2000-06-02) * figures 2,7 * ----- | 1,6,9 | TECHNICAL FIELDS SEARCHED (IPC) G06F |

The present search report has been drawn up for all claims

| Place of search | Date of completion of the search | Examiner |
|---|---|---|
| The Hague | 15 January 2010 | Verhoof, Paul |

EPO FORM 1503 03.82 (P04C01)

## ANNEX TO THE EUROPEAN SEARCH REPORT
## ON EUROPEAN PATENT APPLICATION NO.

EP 09 17 7691

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2010

| Patent document cited in search report | | Publication date | Patent family member(s) | | Publication date |
|---|---|---|---|---|---|
| WO 2006099322 | A1 | 21-09-2006 | CN | 101167049 A | 23-04-2008 |
| | | | EP | 1864210 A1 | 12-12-2007 |
| | | | JP | 2008536362 T | 04-09-2008 |
| | | | KR | 20070118631 A | 17-12-2007 |
| US 5596519 | A | 21-01-1997 | US | 5644524 A | 01-07-1997 |
| FR 2786579 | A1 | 02-06-2000 | NONE | | |

EPO FORM P0459

**EP 2 196 900 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020080125157